# EUROPEAN PATENT SPECIFICATION

(11) **EP 0 984 823 B1**
(45) Date of publication and mention of the grant of the patent: **12.11.2003**
(21) Application number: 98912825.1
(22) Date of filing: 09.04.1998
(51) Int. Cl.: A63G 13/08, F16F 1/12

(54) **PLAYGROUND DEVICE**
SPIELVORRICHTUNG
APPAREIL D'AIRE DE JEU

(30) Priority: 28.05.1997 NL 1006149
(43) Date of publication of application: 15.03.2000
(73) Proprietor: Colorado Holding B.V., 1501 CG Zaandam (NL)
(72) Inventor: VAN DER MEEREN, Franciscus, Antonius, NL-5317 NA Nedethemert (NL)
(74) Representative: De Hoop, Eric
(86) International application number: NL9800205
(87) International publication number: WO98053890

(56) References cited:
- EP-A- 0 190 807
- EP-A- 0 597 775
- DE-B- 1 199 061
- FR-A- 2 735 701
- GB-A- 290 504
- GB-A- 968 793
- US-A- 2 400 425
- US-A- 2 625 395

## Description

The invention relates to a playground device as described in the preamble of claim 1.

Such playground devices are known and often placed in playgrounds or public play areas. By suitable design of the decorative portions the upper part of the playground device can be given the appearance of for instance an animal, such as a horse or an elephant, or of an object, such as for instance a scooter.

Examples of these playground devices are described in Dutch patent applications 76.01918 and 79.05227 and the European patent applications 0.190.807, 0.432.785 and 0.597.775. With the aid of braces engaging about a winding of the coil spring, the coil spring is attached at the upper end to a -usually steel- carrier plate or carrier frame on which the -wooden or plastic- person carrier portion is supported. The -wooden or plastic- decorative portions are attached to the carrier plate or to the seat.

At the lower end the spring coil can be attached to a concrete base plate with the aid of braces engaging about a winding. Alternatively the bottom winding of the coil spring can be attached to a steel foot with the aid of braces, which foot is provided with anchoring legs and is to be secured below ground level. The braces are provided with a screw thread at their ends on which a retaining nut can be screwed to reduce the space within the brace and thus clamping the winding to the base plate or the foot.

Said known playground devices comprise quite a lot of parts, resulting in the costing price being high and the assembly and maintenance requiring quite some effort. Moreover do the many parts form a injury hazard to children using the playground device.

The invention now has the objective to provide a playground device which offers improvement on those points.

For that purpose the invention provides a playground device as described in claim 1.

Because of this, the connection between the support and the actual playing object -which for instance has the appearance of a horse- is very simple. An additional carrier frame in the upper part is not needed.

Here advantageous use is made of the fact that because the decorative portion or the person carrier portion forms a raised body it itself can engage about a winding of the coil spring.

Preferably the raised decorative portion or the raised portion of the person carrier portion has been provided with openings for the winding, which offer access to the winding concerned in either upward direction or downward direction, further comprising means for confining the winding in the opening concerned.

Preferably the opening has a centre line which follows the inclination and preferably also the curvature of the winding concerned. In this way the stability of the upper part on the coil spring is increased.

The boundary of the opening preferably is not entirely circumferential and merges via a slot in the adjacent edge of the decorative portion or the raised portion of the person carrier portion concerned, the clamping means comprising tensioning means which are arranged for pulling the boundaries of the slot towards one another. The clamping means can thus clamp the coil spring in the opening.

The slot is in an advantageous manner substantially horizontally oriented, said edge being turned towards the inside of the playground device, so that space occupied in horizontal sense can be kept minimal, not much more than the space determined by the circumference of the winding of the coil spring.

The simplicity and safety of the playground device according to the invention is further increased when a passage has been provided in the decorative portion or the raised portion of the person carrier portion for accommodation of at least a part of the tensioning means.

In a very simple embodiment of the playground device according to the invention the same tensioning means are deployed for mutual connection of the person carrier portion and the decorative portion.

In a preferred embodiment the playground device comprises at least a front decorative portion and a rear decorative portion, the coil spring being connected to the one decorative portion at at least two locations which are situated above each other and being connected to the other decorative portion at at least one location. Preferably at least two windings of the coil spring have been clamped to a decorative portion at spaced apart locations with the aid of a through going tensioning means.

In this way it is achieved that at least at one side the coil spring is connected to the decorative portion at two locations spaced apart at fixed distances, so that the windings form a rigid triangle at the top, because of which the stability of the upper part of the playground device is considerably increased.

The safety is further increased when the locations of connection of the coil spring to the decorative portions are screened, at least upwardly, by the supporting platform.

Preferably the decorative portions are plate shaped, so that said openings can easily be made.

Preferably the winding has been directly connected at a plurality of connection locations to (the) raised decorative portion(s) or to (the) raised portion(s) of the person carrier portion, the connection locations all, at least almost, being situated in one vertical plane.

Preferably there are at least three connection locations.

The decorative portions and/or clamping bodies are preferably made of plastic, in particular polyethene, such as HmPE (High molecular PE).

The invention will now be elucidated on the basis of an exemplary embodiment shown in the attached drawings.

In which:
Figure 1 shows a perspective view on the exemplary embodiment of the playground device according to the invention, with concrete base plate;
Figure 2 shows a vertical view on a playground device according to the invention substantially similar to the playground device of figure 1;
Figures 3A and 3B show vertical views of the front part and rear part, respectively, of the upper part of the playground device of figure 2, with securing members in dismantled situation;
Figure 4 shows a top view on the lower portion of the coil spring of the playground device of figure 2, with mounting blocks for securing on the base plate;
Figures 5A, 5B and 5C show various views on the mounting blocks shown in figure 4;
Figure 6 shows an alternative embodiment of the mounting blocks; and
Figures 7A-B show an alternative embodiment for a part of the decorative portions.

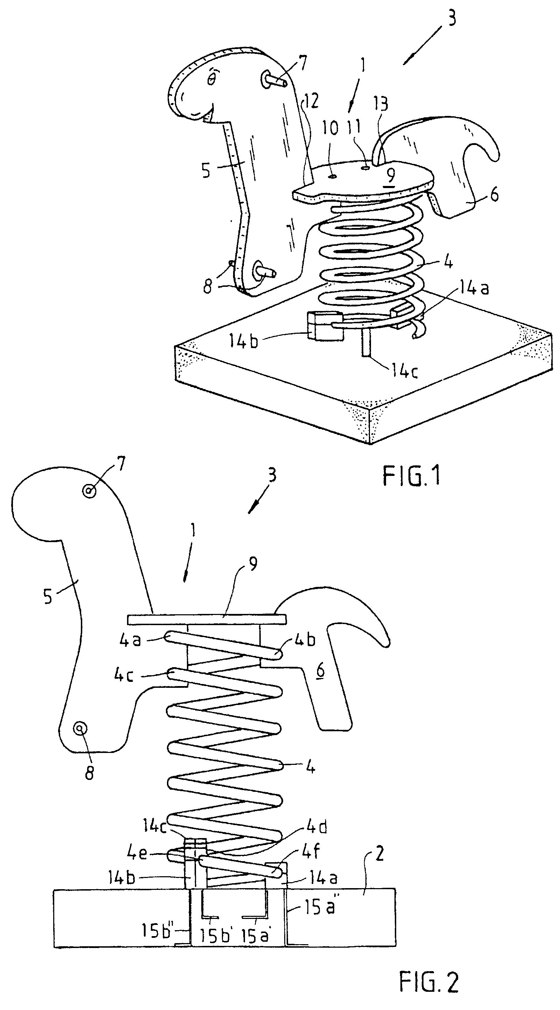

In figure 1 the playground device 1 is shown which is secured on a concrete base plate 2. The playground device 1 comprises an upper part 3 and a coil spring 4. The upper part 3 substantially consists of a vertical plate-shaped front decorative portion 5, a vertical plate-shaped rear decorative portion 6, and a horizontal seating plate 9 lying in between there. The front decorative portion 5 is provided with handles 7 protruding on both sides and foot rests 8 protruding on both sides. In the edges that are turned towards each other, both decorative portions 5 and 6 are provided with slots 12 and 13 for accommodating the seating plate 9. The base plate 9 is provided with holes 10 and 11 for means for securing the seating plate 9 to the decorative portions 5 and 6.

At the bottom end the coil spring 4 is held and anchored to the base plate 2 by means of three mounting blocks 14a, 14b and 14c.

The playground device 1 shown in figure 2, is substantially similar to the one of figure 1. A small difference is that the winding turns the other way around and as a result the mounting blocks are placed in different order.

For the rest the relevant parts are similar.

It can clearly be seen that the connection between the upper part 3 and the coil spring 4 is very simple. The coil spring 4 has been secured in the decorative portions 5 and 6 at the upper end at the location of the winding portions 4a, 4b and 4c. The seating plate 9 upwardly screens said winding portions/securing locations.

At the lower end also a very simple securing construction has been realized. In the mounting blocks 14a, 14b and 14c bent-over anchoring rods 15a', 15a'', 15b', 15b'' and so on have been inserted and with their remaining length have been accommodated in the concrete of base plate 2. The exact construction of the various connections will be discussed below.

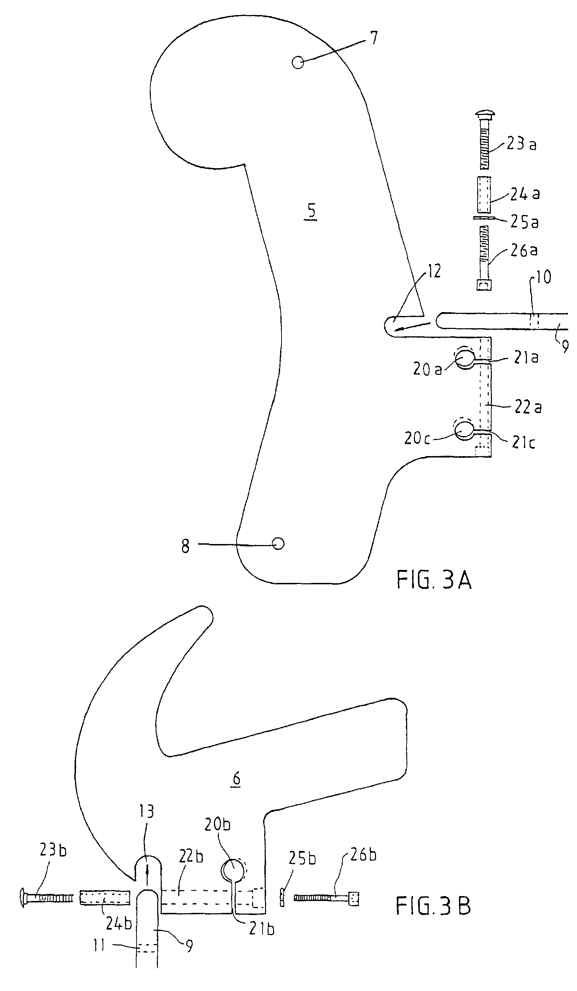

In the figures 3A and 3B this has been done for the connection of the coil spring 4 and the seating plate 9 with the decorative portions 5 and 6. At the edges facing one another, the decorative portions 5 and 6 have been provided with holes 20a, 20b and 20c, which in horizonal direction inwardly merge in slots 21a, 21b and 21c which are through-going in two directions. In the decorative portions 5 and 6 at the location of the area where the slots 21a-21c are situated vertical passages 22a, 22b have been provided, which extend fully from above to below.

At mounting the upper part 3 on the coil spring 4 the decorative portions 5 and 6 are slid with their holes 22a-c onto the upper end of the coil spring 4 until the correct final orientation is reached. Subsequently the seating plate 9 is placed with the front and rear edges in the slots 12 and 13, the holes 10 and 11 being aligned with the passages 22a, 22b.

Then the lock bolts 23a, 23b with threaded bushes 24a, 24b screwed thereon are inserted from above in the passages 22a, 22b. From below the cylinder head bolts 26a, 26b with rivets 25a, 25b are brought in the passages 22a, 22b, and with their ends screwed in threaded bushes 24a, 24b. By tightening the cylinder head bolts and consequently pulling both bolts towards one another, the slots 21a-c will be pressed closed and the holes 20a-c will be reduced in cross-section and clamp the portions of the coil spring windings accommodated therein. At the same time the seating plate 9 is secured to the upper end of the coil spring via the decorative portions 5 and 6.

In this example the decorative portions 5 and 6 have been made of HmPE plate material with a thickness of 25 mm, in which the holes 20a-c have an undeformed cross-section of 18 mm and the slots 21a-c an undeformed width of 2 mm. M8 bolts have been used here. The decorative portions and the seating plate can also be shaped in a mould.

It can be seen that the holes 20a-c are not purely horizontally oriented, but have an entrance and an exit which in the vertical sense are situated displaced with respect to one another, because the boundaries of the holes 20a-c follow the track of the windings of the coil spring 4, in particular the inclination. With a thickness of the decorative portions 5 and 6 of approximately 25 mm it can furthermore be desired that the holes 20a-c follow the curvature in the horizontal sense of the windings of the coil spring 4.

Alternatively the seating plate 9 can be provided with integrally formed pending vertical portions (for instance an inverted U-shape), which in a similar way can be provided with holes for securing the winding portions. The decorative portions are then situated entirely beyond the coil spring. The seating plate could possibly also be replaced by another person carrier portion, such as for instance a vertical plate provided with foot rests and/or a small saddle.

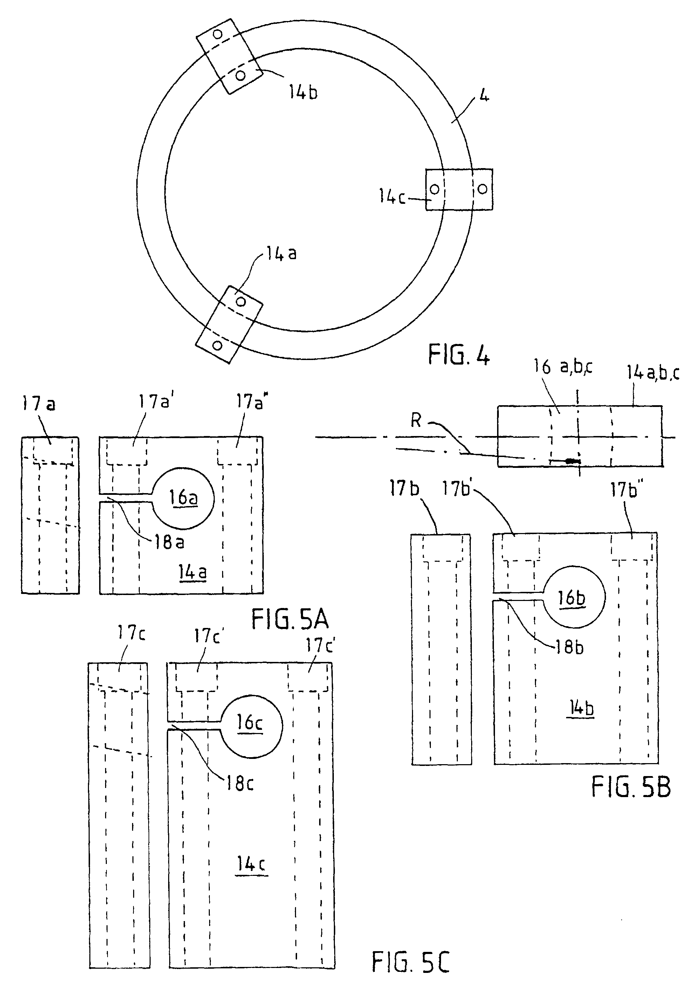

In figure 4 the bottom winding of the coil spring 4 has been shown, which winding is held by means of three mounting blocks 14a, 14b and 14c which are spaced apart at 120°. As can be seen in the figures 5A, 5B and 5C, the mounting blocks 14a, 14b and 14c have different heights. They are provided with holes 16a, 16b and 16c for the respective accommodation of winding portions 4d, 4e and 4f of the coil spring 4. These holes 16a, 16b and 16c merge in through-going slots 18a, 18b and 18c. On the radial inner side of the mounting blocks 14a, 14b and 14c vertical passages 17a', 17b', 17c' have been provided. On the radial outside vertical passages 17a", 17b'', 17c'' have been provided.

It can furthermore be seen that the holes 16a, 16b and 16c like the holes 20a, 20b and 20c discussed above are inclined, the angle a corresponding to the angle of the winding of the coil spring 4 there. Furthermore it can be seen that the holes 16a, 16b and 16c also follow the track of the winding of the coil spring 4 in horizontal sense, because they have been designed similarly curved. With narrower blocks (for instance 18 mm) this may not be necessary.

When placing the coil spring 4 on concrete plate 2 still to be formed, first threaded bushes corresponding to the threaded bushes 24a, 24b and 24c mentioned earlier and threaded anchoring bolts 15a', 15a'', 15b', 15b'' screwed in the bushes with their ends, and on which bolts a rivet and a nut are placed, are inserted from below in the passages 17a', 17a'', 17b', 17b'', 17c' and 17c'' of the mounting blocks 14a, 14b and 14c. In addition, cylinder head bolts corresponding to cylinder head bolts 26a, 26b mentioned earlier are inserted from above in said passages in the mounting blocks 14a, 14b and 14c and screwed in the threaded bushes present there. The coil spring 4, possibly with an upper part 3 mounted on it already, is then inserted through the holes 16a, 16b and 16c with its lower end, until the correct orientation and position of the mounting blocks 14a, 14b and 14c is reached. Then the bolts are screwed tight. In this way the slots 18a, 18b and 18c are made smaller and as a result the winding portions 4d, 4e, 4f of the coil spring 4 are clamped in the holes 16a, 16b and 16c. After the upper part 3 has been arranged on the upper end of the coil spring 4 the whole is placed in or on the mould for the base plate 2, in which said anchoring bolts will project into the concrete yet to be poured. After the pouring and hardening of the concrete the playground device with the mounting blocks 14a, 14b and 14c secured thereon is ready for use.

The mounting blocks 14a, 14b and 14c will preferably also be made of HmPE, with a thickness of 18 mm. The width may be 50 mm and the respective heights 47, 68 and 89 mm. Per winding a difference in height of 63 mm is bridged. The diameter of the winding can be 170 mm here.

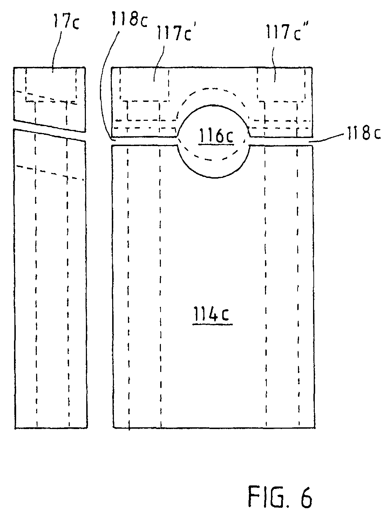

In figure 6 the mounting block 114c is shown, which is composed of two parts fitting onto each other. The mounting block 114c is just like mounting block 14c of figure 5C provided with a hole 116c for the winding of a coil spring and two vertical passages 117c' and 117c'' for the securing means and anchoring means as discussed before. The necessary clamping force is obtained now by tightening both lock bolts.

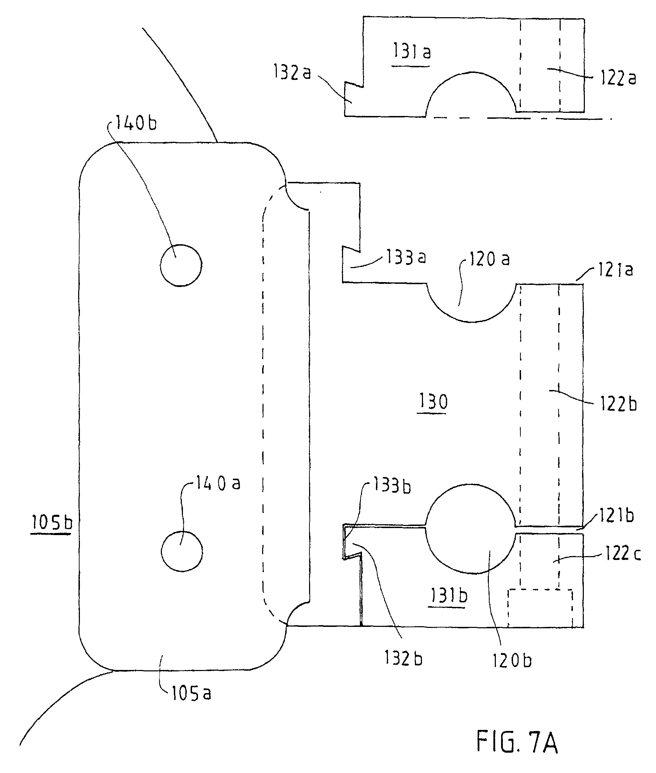

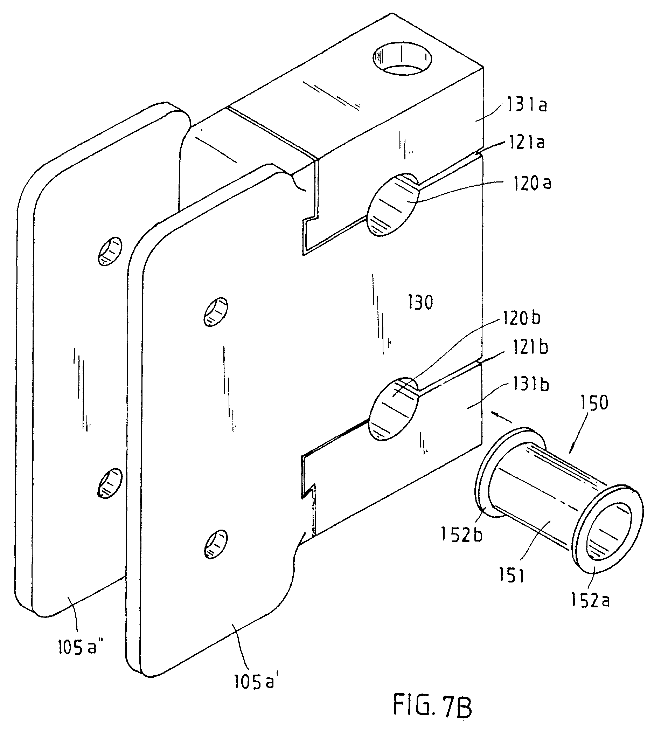

The decorative portions need not necessarily be formed from one whole. From considerations of keeping stock it can namely be considered to have the decorative portion consist of two parts, one portion being standard and being secured to the coil spring, wherein the other portion can be variable in shape and can be secured to said portion. This is further illustrated in the figures 7A and 7B where the front decorative portion is composed of a first decorative portion 105b and a second decorative portion 105a, the decorative portion 105b being accommodated between a fork construction of the decorative portion 105a and being fixedly secured therein by means of bolts extending through the holes 140a and 140b. The decorative portion 105a is further provided with an integrally formed tensioning block 130, which has been provided with a vertical bore 122b.

As can be seen the portion of the decorative portion destined for securing to the coil spring need not be integrally formed either, without considerably detracting from the simplicity of the shape and construction. The tensioning block 130 is provided with dovetail-shaped recesses 133a, 133b at the top and at the bottom. In these dovetail-shaped recesses dovetail-shaped projections 132a, 132b of auxiliary tensioning blocks 131a, 131b fit. These auxiliary tensioning blocks 131a and 131b are provided with bores 122a and 122c, which after the auxiliary tensioning blocks 131a and 131b have been slid in transverse direction into their places, the dovetail-shaped projections 132a, 132b fitting in the recesses 133a, 133b, are aligned with bore hole 122b. Then also the holes 120a and 120b are formed, which each are meant for accommodation of a portion of the winding of the coil spring. At the side which faces the inside of the device, the holes 120a and 120b again merge in slots 121a and 121b, which can be pressed closed when tightening the tensioning means which extends through the bore hole 122a-c. With this tensioning means the seating plate, which is not shown, can be fixed, this seating plate being supported on the upper surface of the auxiliary tensioning block 131a.

In figure 7b a rubber tulle 150 is shown, which fits in the hole 120b and comprises a bush 151 and two end flanges 152a, 152b for axial fixing. This tulle 150 can be used when the torsional stress in the winding material as a result of the compressing-in or stretching of the coil or other deformation would become so high, that a torsion-free clamping of the winding in the hole 120b would lead to unacceptable peak tension in the material of the winding at the location of the hole 120b. A possibility to prevent such high peak tension is to make use of a material, such as HmPE, which can be deformed such that the winding portion in the hole 120b can twist along with the winding portion situated there below. When the material of the tensioning block is harder however, for instance a metal composite, an elastic bush, such as tulle 150 may be the solution. The tulle 150 allows torsion of the winding portion 121b without the stability being affected by it.

## Claims

1. Playground device (1) comprising an upper part (3) for carrying a user of the playground device and a support (4) for supporting the upper part on a basis (2), the support comprising at least one coil spring (4) and the upper part (3) comprising a person carrier portion (9) for the user and one or more raised decorative portions (5, 6 ; 105a,b) connected to it, the upper end of the coil spring being connected to the raised decorative portion or to the raised portion of the person carrier portion, when this comprises raised portions, **characterized in that** the raised decorative portion (5, 6 ; 105a,b, 130) or the raised portion of the person carrier portion, provided with at least one opening (20a-c; 120a,b) for a winding (4a-c) of the coil spring, the device further comprising clamping means (22a,b, 23a,b ; 122a-c, 131a,b) for securing the winding in the opening concerned.

2. Playground device according to claim 1, the raised decorative portion (105a,b, 130) or the raised portion of the person carrier portion being provided with openings (120a,b) for the winding, which offer access to the winding concerned in either upward direction or downward direction, further comprising means (131a,b) for confining the winding in the opening concerned.

3. Playground device according to claim 1 or 2, the opening (20a-c; 120a,b) having a centre line which follows the inclination and preferably also the curvature of the winding concerned.

4. Playground device according to any one of the claims 1-3, the boundary of the opening (20a-c; 120a,b), whether or not after using the said means for confining of claim 2, not being entirely circumferential and merging via a slot (21a-c ; 121a,b) in the adjacent edge of the decorative portion or raised portion of the person carrier portion concerned, the clamping means comprising tensioning means (23a,b, 26a,b) which are arranged for pulling the boundaries of the slot to one another.

5. Playground device according to claim 4, the slot (21a-c; 121a,b) being substantially horizontally directed and said edge being turned towards the inside of the playground device.

6. Playground device according to claim 4 or 5, a passage (22a,b ; 122a,b) being provided in the decorative portion or the raised portion of the person carrier portion for accommodation of at least a part of the tensioning means (23a,b, 26a,b).

7. Playground device according to claim 5, 6 or 7, the tensioning means (23a,b, 26a,b) also securing the person carrier portion (9) and the decorative portion (5, 6) to one another.

8. Playground device according to any one of the preceding claims, comprising at least a front decorative portion (5) and a rear decorative portion (6), the coil spring (4) being connected to the one decorative portion (5; 6) at at least two locations which are situated above each other and being connected to the other decorative portion (6; 5) at at least one location.

9. Playground device according to claim 8, at least two windings (4a,c) of the coil spring (4) being clamped to a decorative portion (5) at spaced apart locations with the aid of a through going tensioning means (23b, 24b, 25b, 26b).

10. Playground device according to any one of the preceding claims, the locations of connection of the coil spring (4) to the decorative portion (5, 6) are screened at least upwardly by a supporting platform (9).

11. Playground device according to any one of the preceding claims, the decorative portion (5, 6) being plate-shaped

12. Playground device according to any one of the preceding claims, the winding (4) being directly connected at a plurality of connection locations to (the) raised decorative portion(s) (5, 6) or to (the) raised portion(s) of te person carrier portion, the connection locations all at least almost being situated in one vertical plane.

13. Playground device according to claim 12, at least three connection locations being present.

14. Playground device according to any one of the preceding claims, a winding of the lower end of the coil spring (4) being clamped in at least one clamping or securing body (14a-c), which has been provided with an opening (16a-c) for the winding of the coil spring, the boundary of the openings not being entirely circumferential and via at least one slot (16a-c) merging in an adjacent edge of the clamping or securing body, tensioning means being present for pulling the boundaries of the slot to one another.

15. Playground device according to claim 14, the opening (16a-c) having a centre line which follows the inclination and preferably also the curvature of the winding (4) concerned.

16. Playground device according to claim 15, the slot (10a-c) being substantially horizontally directed and said edge being turned towards the inside of the playground device.

17. Playground device according to claim 16, passages (17a-c) being provided in the clamping body for accommodating at least a part of the tensioning means.

18. Playground device according to claim 17, passages (17a-c; 117c) being provided in the clamping body for means for anchoring the clamping body (14a-c; 114c) concerned in a concrete basis.

## Patentansprüche

1. Spielvorrichtung (1) umfassend ein Oberteil (3) zum Tragen eines Benutzers der Spielvorrichtung und eine Stütze (4) zum Tragen des Oberteils auf einer Basis (2), wobei die Stütze zumindest eine Spiralfeder (4) und das Oberteil (3) einen Personentragteil (9) für den Benutzer und einen oder mehrere damit verbundene aufrechte Schmuckteile (5, 6; 105a,b) umfaßt, wobei das obere Ende der Spiralfeder mit dem aufrechten Schmuckteil oder mit dem aufrechten Teil des Personentragteils, falls dieser aufrechte Teile umfaßt, verbunden ist, **dadurch gekennzeichnet, daß** der aufrechte Schmuckteil (5, 6; 105a,b, 130) oder der aufrechte Teil des Personentragteils mit zumindest einer Öffnung (20a-c; 120a,b) für eine Windung (4a-c) der Spiralfeder versehen ist, wobei die Vorrichtung weiter Klemmittel (22a,b, 23a,b; 122a-c, 131a,b) zum in der betreffenden Öffnung Festmachen der Windung umfaßt.

2. Spielvorrichtung nach Anspruch 1, wobei der aufrechte Schmuckteil (105a,b, 130) oder der aufrechte Teil des Personentragteils mit Öffnungen (120a,b) für die Windung versehen ist, die in aufwärtse Richtung oder aber in abwärtse Richtung der betreffenden Windung Zugang verschaffen, weiter umfassend Mittel (131a, b) um die Windung in der betreffenden Öffnung einzuschließen.

3. Spielvorrichtung nach Anspruch 1 oder 2, wobei die Öffnung (20a-c; 120a,b) eine Herzlinie hat, die der Neigung und vorzugsweise auch der Krümmung der betreffenden Windung folgt.

4. Spielvorrichtung nach einem der Ansprüche 1-3, wobei die Begrenzung der Öffnung (20a-c; 120a,b) ja oder nicht nach benützung den genannten Mitteln zum Einschließen gemäß Anspruch 2 nicht vollständig umgehend ist und via eine Spalte (21a-c, 121a,b) in einen nahegelegenen Rand des betreffenden Schmuckteils oder aufrechten Teils des Personentragteils mündet, wobei die Klemmittel Spannmittel (23a,b, 26a,b) umfassen, die zum zueinander Anziehen der Begrenzungen der Spalte angeordnet sind.

5. Spielvorrichtung nach Anspruch 4, wobei die Spalte (21a-c; 121a,b) hauptsächlich horizontal gerichtet ist, und wobei der Rand der Innenseite der Spielvorrichtung zugekehrt ist.

6. Spielvorrichtung nach Anspruch 4 oder 5, wobei in dem Schmuckteil oder dem aufrechten Teil des Personentragteils ein Durchgang (22a,b; 122b) zur Aufnahme von zumindest einem Teil der Spannmittel (23a,b, 26a,b) vorgesehen ist.

7. Spielvorrichtung nach Anspruch 5, 6 oder 7, wobei die Spannmittel (23a,b, 26a,b) auch den Personentragteil (9) und den Schmuckteil (5, 6) aneinander befestigen.

8. Spielvorrichtung nach einem der vorhergehenden Ansprüche, umfassend zumindest einen vordersten Schmuckteil (5) und einen hintersten Schmuckteil (6), wobei die Spiralfeder (4) auf zumindest zwei obeneinander gelegenen Stellen mit dem einen Schmuckteil (5, 6) verbunden ist und auf zumindest einer Stelle mit dem anderen Schmuckteil (6; 5) verbunden ist.

9. Spielvorrichtung nach Anspruch 8, wobei zumindest zwei Windungen (4a,c) der Spiralfeder (4) auf auf Abstand voneinander gelegenen Stellen mit Hilfe von einem durchgehenden Spannmittel (236, 246, 256, 266) an einem Schmuckteil (5) festgeklemmt sind.

10. Spielvorrichtung nach einem der vorhergehenden Ansprüche, wobei die Stellen der Verbindung der Spiralfeder (4) mit dem Schmuckteil (5, 6) zumindest nach oben durch eine Stützplattform (9) abgeschirmt sind.

11. Spielvorrichtung nach einem der vorhergehenden Ansprüche, wobei der Schmuckteil (5, 6) plattenförmig ist.

12. Spielvorrichtung nach einem der vorhergehenden Ansprüche, wobei die Windung (4) auf mehreren Verbindungsstellen direkt mit dem (den) aufrechten Schmuckteil(en) (5, 6) oder dem (den) aufrechten Teil(en) des Personentragteils verbunden ist, wobei die Verbindungsstellen alle zumindest nahezu in einer Vertikalebene gelegen sind.

13. Spielvorrichtung nach Anspruch 12, wobei zumindest drei Verbindungsstellen vorhanden sind.

14. Spielvorrichtung nach einem der vorhergehenden Ansprüche, wobei eine Windung des unteren Endes der Spiralfeder (4) in zumindest einem Klemm- oder Befestigungskörper (14a-c) festgeklemmt ist, der mit einer Öffnung (16a-c) für die Windung der Spiralfeder versehen ist, wobei die Begrenzung der Öffnung nicht vollständig umgehend ist und via zumindest eine Spalte (18a-c) in einen nahegelegenen Rand des Klemm- oder Befestigungskörpers mündet, wobei Spannmittel zum zueinander Anziehen der Begrenzungen der Spalte vorhanden sind.

15. Spielvorrichtung nach Anspruch 14, wobei die Öffnung (16a-c) eine Herzlinie hat, die der Neigung und vorzugsweise auch der Krümmung der betreffenden Windung (4) folgt.

16. Spielvorrichtung nach Anspruch 15, wobei die Spalte (18a-c) hauptsächlich horizontal gerichtet ist und der genannte Rand der Innenseite der Spielvorrichtung zugekehrt ist.

17. Spielvorrichtung nach Anspruch 16, wobei in dem Klemmkörper Durchgänge (17a-c) für Aufnahme von zumindest einem Teil der Spannmittel vorgesehen sind.

18. Spielvorrichtung nach Anspruch 17, wobei in dem Klemmkörper Durchgänge (17a-c; 117c) für Mittel zur Verankerung des betreffenden Klemmkörpers (14a-c; 114c) in einem Betonunterboden vorgesehen sind.

## Revendications

1. Dispositif de terrain de jeu (1) comprenant une partie supérieure (3) pour porter un utilisateur du dispositif de terrain de jeu et un support (4) pour supporter la partie supérieure sur une base (2), le support comprenant au moins un ressort hélicoïdal (4) et la partie supérieure (3) comprenant une partie porte-personne (9) pour l'utilisateur et une ou plusieurs parties décoratives surélevées (5, 6 ; 105a, b) reliées à celle-ci, l'extrémité supérieure du ressort hélicoïdal étant reliée à la partie décorative surélevée ou à la partie surélevée de la partie porte-personne, lorsque celle-ci comprend des parties surélevées, **caractérisé en ce que** la partie décorative surélevée (5, 6 ; 105a, b, 130) ou la partie surélevée de la partie porte-personne, pourvue d'au moins une ouverture (20a, b ; 120a, b) pour une spire (4a à c) du ressort hélicoïdal, le dispositif comprenant en outre des moyens de serrage (22a, b, 23a, b ; 122a, b, 131a, b) pour fixer la spire dans l'ouverture concernée.

2. Dispositif de terrain de jeu selon la revendication 1, la partie décorative surélevée (105a, b, 130) ou la partie surélevée de la partie porte-personne étant pourvue d'ouvertures (120a, b) pour la spire, qui offrent un accès à la spire concernée soit dans la direction ascendante, soit dans la direction descendante, comprenant en outre des moyens (131a, b) pour fixer la spire dans l'ouverture concernée.

3. Dispositif de terrain de jeu selon la revendication 1 ou 2, l'ouverture (20a, b, c ; 120a, b) ayant une ligne médiane qui suit l'inclinaison et de préférence également la courbure de la spire concernée.

4. Dispositif de terrain de jeu selon l'une quelconque des revendications 1 à 3, la limite de l'ouverture (20a, b, c ; 120a, b), que ce soit ou non après utiliser ladites moyens pour fixer selon revendication 2, n'étant pas entièrement périphérique et fusionnant par l'intermédiaire d'une fente (21a à c ; 121a, b) dans le bord adjacent de la partie décorative ou partie surélevée de la partie porte-personne concernée, les moyens de serrage comprenant des moyens de tensionnage (23a, b, 26a, b) qui sont agencés pour tirer les limites de la fente l'une vers l'autre.

5. Dispositif de terrain de jeu selon la revendication 4, la fente (21a à c ; 121a, b) étant dirigée sensiblement horizontalement et ledit bord étant tourné vers l'intérieur du dispositif de terrain de jeu.

6. Dispositif de terrain de jeu selon la revendication 4 ou 5, un passage (22a, b ; 122a, b) étant prévu dans la partie décorative ou la partie surélevée de la partie porte-personne pour le logement d'au moins une partie des moyens de tensionnage (23a, b, 26a, b).

7. Dispositif de terrain de jeu selon la revendication 5, 6 ou 7, les moyens de tensionnage (23a, b, 26a, b) fixant également la partie porte-personne (9) et la partie décorative (5, 6) l'une à l'autre.

8. Dispositif de terrain de jeu selon l'une quelconque des revendications précédentes, comprenant au moins une partie décorative avant (5) et une partie décorative arrière (6), le ressort hélicoïdal (4) étant relié à une partie décorative (5, 6) au niveau d'au moins deux emplacements qui sont situés l'un au-dessus de l'autre et étant reliés à l'autre partie décorative (6 ; 5) au niveau d'au moins un emplacement.

9. Dispositif de terrain de jeu selon la revendication 8, au moins deux spires (4a, c) du ressort hélicoïdal (4) étant fixées à une partie décorative (5) au niveau d'emplacements espacés à l'aide d'un moyen de tensionnage (23b, 24b, 25b, 26b) passant à travers.

10. Dispositif de terrain de jeu selon l'une quelconque des revendications précédentes, les emplacements de liaison du ressort hélicoïdal (4) à la partie décorative (5, 6) sont protégés au moins vers le haut par une plate-forme de support (9).

11. Dispositif de terrain de jeu selon l'une quelconque des revendications précédentes, la partie décorative (5, 6) ayant la forme d'une plaque.

12. Dispositif de terrain de jeu selon l'une quelconque des revendications précédentes, la spire (4) étant directement reliée au niveau d'une pluralité d'emplacements de liaison à la (aux) partie(s) décorative(s) surélevée(s) (5, 6) ou à la (aux) partie(s) surélevée(s) de la partie porte-personne, les emplacements de liaison tous au moins presque étant situés dans un plan vertical.

13. Dispositif de terrain de jeu selon la revendication 12, au moins trois emplacements de liaison étant présents.

14. Dispositif de terrain de jeu selon l'une quelconque des revendications précédentes, une spire de l'extrémité inférieure du ressort hélicoïdal (4) étant fixée dans au moins un corps de serrage ou de fixation (14a, b) qui a été pourvu d'une ouverture (16a à c) pour la spire du ressort hélicoïdal, la limite des ouvertures n'étant pas entièrement périphérique par l'intermédiaire d'au moins une fente (10a à c) fusionnant dans un bord adjacent du corps de serrage ou de fixation, des moyens de tensionnage étant présents pour tirer les limites de la fente l'une vers l'autre.

15. Dispositif de terrain de jeu selon la revendication 14, l'ouverture (16a à c) ayant une ligne médiane qui suit l'inclinaison et de préférence également la courbure de la spire (4) concernée.

16. Dispositif de terrain de jeu selon la revendication 15, la fente (10a à c) étant dirigée sensiblement horizontalement et ledit bord étant tourné vers l'intérieur du dispositif de terrain de jeu.

17. Dispositif de terrain de jeu selon la revendication 16, des passages (17a à c) étant prévus dans le corps de serrage pour loger au moins une partie des moyens de tensionnage.

18. Dispositif de terrain de jeu selon la revendication 17, des passages (17a à c ; 117c) étant prévus dans le corps de serrage pour des moyens pour ancrer le corps de serrage (14a, b ; 114c) concerné dans une base de béton.
